Europäisches Patentamt

**European Patent Office**

**Office européen des brevets**

(19)

(11) Numéro de publication : **0 130 884**
**B1**

(12) **FASCICULE DE BREVET EUROPÉEN**

(45) Date de publication du fascicule du brevet :
26.04.89

(21) Numéro de dépôt : **84401281.5**

(22) Date de dépôt : **21.06.84**

(51) Int. Cl.⁴ : **B 07 B   9/00,** B 01 D 45/06

(54) Dispositif d'élutriation pour purification et séparation de poudres de densités différentes.

(30) Priorité : **29.06.83 FR 8310717**

(43) Date de publication de la demande :
**09.01.85 Bulletin 85/02**

(45) Mention de la délivrance du brevet :
**26.04.89 Bulletin 89/17**

(84) Etats contractants désignés :
**DE FR GB SE**

(56) Documents cités :
**EP—A— 0 003 005
FR—A—   425 880
FR—A— 1 359 659
FR—A— 1 514 057
US—A— 2 940 592
US—A— 3 294 236
US—A— 3 550 773**

(73) Titulaire : **SOCIETE NATIONALE D'ETUDE ET DE CONSTRUCTION DE MOTEURS D'AVIATION,
"S.N.E.C.M.A."
2 Boulevard Victor
F-75015 Paris (FR)**

(72) Inventeur : **Morbioli, René Jean
36, rue du Bas-Coudray
F-91100 Corbeil (FR)**
Inventeur : **Ney, Jean
46, rue du Bas-Coudray
F-91100 Corbeil (FR)**

(74) Mandataire : **Moinat, François
S.N.E.C.M.A. Service des Brevets Boîte Postale 81
F-91003 Evry Cédex (FR)**

## Description

L'invention concerne un dispositif d'élutriation pour purification et séparation de poudres de densités différentes, le dispositif comportant au moins deux colonnes de tri présentant deux zones de sections différentes, une arrivée de fluide d'entraînement, des moyens d'introduction de la poudre à trier, une sortie du fluide d'entraînement à la partie haute de la colonne et un filtre de récupération sur lequel passe le fluide d'entraînement à sa sortie de la colonne.

La réalisation de pièces en alliages spéciaux par frittage de poudres métalliques a permis d'améliorer leurs propriétés mécaniques et d'abaisser leur prix de revient. Toutefois pour obtenir de manière constante, les hautes qualités mécaniques découlant du procédé de fabrication il est nécessaire d'utiliser des poudres de grande pureté. La pureté chimique et plus particulièrement l'absence d'impuretés non métalliques a une importance capitale en ce qui concerne la résistance à la fatigue sous température élevée.

Une application importante est la réalisation de pièces tournantes, pour turbines et compresseurs de moteurs à réaction, soumises à de fortes contraintes. La demande en poudres de haute pureté, ayant un spectre granulométrique déterminé, nécessite des moyens de production de mise en oeuvre complexe et délicate.

L'article « Superclean superalloys powders » de Paul LOEWENSTEIN présenté à la conférence Power Metallurgy Superalloys, 18-20 novembre 1980, décrit un dispositif permettant de déterminer la concentration en inclusions non métalliques d'une poudre métallique. La méthode, développée par Nuclear Metals Inc. (NMI), fait appel au principe délutriation à l'eau. Une quantité déterminée de poudre est mise dans une colonne en verre comportant à sa partie inférieure un tamis susceptible de retenir la poudre. De l'eau désionisée et désaérée est envoyée à la base de la colonne de manière que toute la poudre forme un nuage à lit fluidisé. L'eau quitte la colonne à sa partie haute au-dessus du nuage fluidisé, par un tube de déversement et passe sur un filtre sur lequel les particules non métalliques sont retenues. On détermine le nombre et la nature des particules recueillies au microscope.

Ce dispositif ne permet pas la production en continu ou en semi-continu de particules de haute pureté ; mais a pour but le contrôle de la pureté de la poudre testée.

Un procédé d'élutriation utilisant, comme fluide d'entraînement, de l'air est décrit dans le US-A-3457 336 et a pour objet la formation de granulés d'engrais à partir de gouttelettes fondues. L'air d'élutriation est admis à la partie basse de la colonne. Un ajutage proche de l'arrivée d'air permet l'alimentation en poudre. L'air et la poudre entraînée sortent à la partie supérieure de la colonne et passent sur un filtre. La poudre retenue est éventuellement recyclée dans l'alimentation. Des gouttelettes de produit fondu sont introduites à la partie supérieure de la colonne et tombent dans le nuage de poudre, dans lequel elles se refroidissent. Elles sont évacuées à la partie basse de la colonne de manière continue. Le courant d'air et de poudre a pour fonction de refroidir les gouttelettes et d'éviter leur agrégation. On ne cherche pas à séparer un mélange granulométrique de poudres, la taille des gouttelettes étant très importante par rapport à celle de la poudre, mais à séparer la poudre non agglomérée aux gouttelettes pour obtenir en sortie des granulés propres. On connaît encore du FR-A-2 318 681 un dispositif permettant la séparation de résines de densité différente. La colonne dans laquelle se fait cette séparation présente deux zones de diamètres différents : une zone inférieure de faible diamètre et une zone supérieure de plus grand diamètre formant un tore autour de l'extrémité supérieure de la zone de faible diamètre. Le mélange de résines est placé sur un tamis maintenu près du fond de l'appareil. L'eau d'entraînement arrive par le fond et entraîne les résines qui forment un nuage dont les grains les plus légers occupent la partie haute de la colonne. L'eau s'écoule à niveau supérieur à celui de la tête du nuage. Les résines se séparent pour les fractions les plus légères dans le tore supérieur et pour les fractions les plus lourdes dans le fond de la colonne.

Ce dispositif ne permet pas de trier, au moins de manière semi-continue, les grains d'une poudre.

pour les diverses raisons évoquées ces divers procédés ne permettent pas de trier des poudres de manière simple et dans le cas d'un fluide liquide, il est nécessaire, sauf en ce qui concerne les résines, de faire sécher les poudres séparées, ce qui ajoute un risque non négligeable de pollution.

L'invention a pour but de fournir un dispositif d'élutriation pour la séparation de poudres de densités différentes pouvant fonctionner en semi-continu, le fluide d'élutriation étant gazeux.

Le dispositif proposé pour l'élutriation de poudres de densités différentes est du type se composant d'une succession d'au moins deux colonnes de tri présentant chacune deux zones de sections différentes, celle de la zone basse étant inférieure à celle de la zone haute, et comportant à la partie haute, d'une part, des moyens d'introduction de la poudre à trier et un fluide d'entraînement constitués par un tube distributeur disposé dans l'axe de la colonne et débouchant, à la base de la zone basse, par une ouverture située devant un déflecteur et, d'autre part, une sortie du fluide d'entraînement et, à la partie basse une réserve à grains recevant la fraction de poudre de forte granulométrie et un dispositif d'évacuation de ces grains.

Ce dispositif est remarquable en ce que le rapport des deux sections des zones de chaque colonne est constant d'une colonne à l'autre et en ce que la section de la zone basse de la colonne de rang (n + 1) est telle que la vitesse d'écoulement y est égale à la vitesse d'écoulement dans la zone haute de la colonne de rang n qui précède.

Avantageusement, sur la sortie du fluide d'entraînement de chaque colonne est placé un tamis dimensionné de façon à ce qu'il retienne les particules légères d'un diamètre minimal égal au diamètre minimal des particules lourdes retenues dans la réserve située à la base de la même colonne.

Les explications et figures, données ci-après à titre d'exemple, permettront de comprendre comment l'invention peut être réalisée.

La figure 1 représente une vue schématique d'une chaîne de traitement comportant des dispositifs d'élutriation conforme à l'invention.

La figure 2 est une vue schématique d'une autre forme de réalisation d'une colonne utilisée dans un dispositif conforme à l'invention.

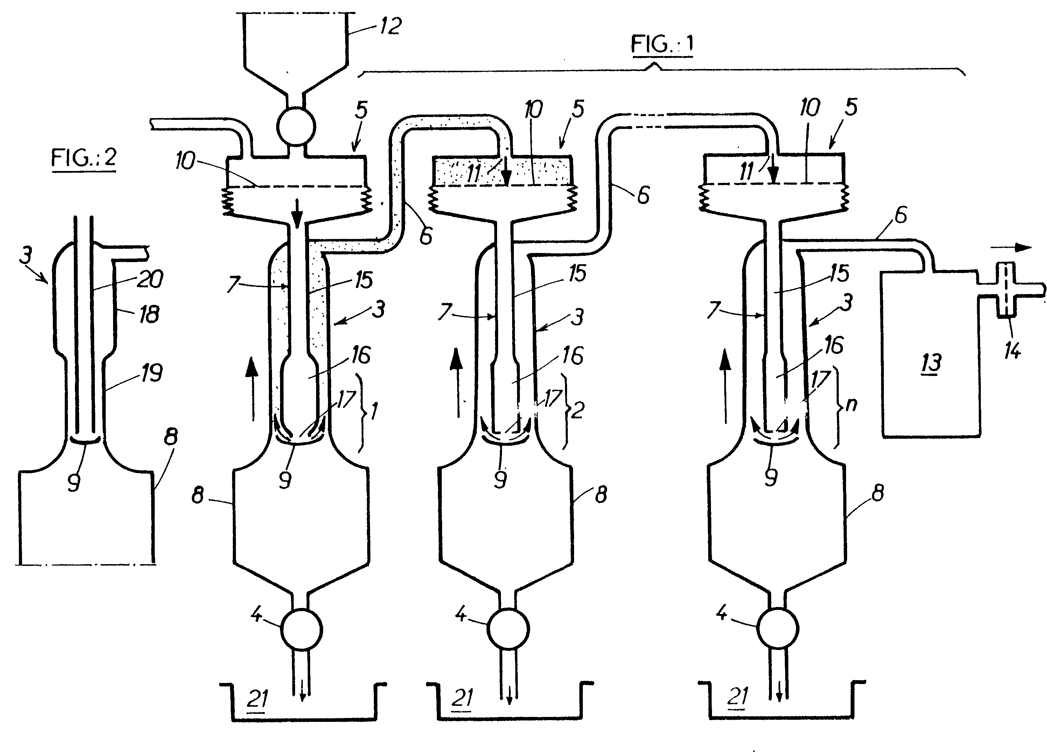

La figure 1 représente schématiquement une chaîne de traitement de poudre par fractionnements successifs. cette chaîne est constituée d'un nombre de dispositifs 1, 2, ...n, correspondant au nombre de fractions désirées, disposés en série. Chaque dispositif est formé d'une colonne de tri 3, munie à sa partie basse d'un dispositif d'évacuation de grains 4 et à sa partie supérieure de moyens d'introduction de la poudre et du fluide d'entraînement représentés globalement par la référence 5. A la partie supérieure de chaque colonne est prévue également une sortie 6 du fluide d'entraînement chargé des fractions les plus légères de la poudre, c'est-à-dire des grains de même granulométrie mais de densité plus faible ou des grains, à densité égale, de granulométrie plus petite que les grains retenus dans le dispositif précédent.

L'ensemble 5 comporte un tube distributeur 7 fixé dans l'axe de la colonne de tri 3 et descendant dans celle-ci jusqu'en limite d'une partie de colonne formant réserve à grains 8 et recueillant la fraction des grains de plus forte granulométrie. A une faible distance du fond au moins partiellement ouvert du tube distributeur est fixé un déflecteur 9 dont la forme est prévue pour diriger le courant du fluide d'entraînement selon un mouvement ascendant dans la colonne. L'extrémité supérieure du tube distributeur 7 est reliée à des moyens d'introduction de poudre et plus particulièrement à la chambre inférieure d'un tamis vibrant 10 dont la chambre supérieure reçoit la poudre à trier et le fluide d'entraînement. Les dimensions des mailles du tamis sont déterminées par sa position dans la chaîne de traitement. La fonction du tamis, outre d'obtenir une suspension homogène de la poudre dans le fluide, est d'arrêter les particules de faible densité généralement d'origine non métallique. Les tamis, autres que le premier de la chaîne, reçoivent le fluide d'entraînement chargé de poudre par une entrée 11 prévue à la partie supérieure et généralement dans l'axe de la chambre supérieure. Le premier tamis de la chaîne, reçoit selon la forme de réalisation représentée la poudre et le fluide d'entraînement séparément. La poudre est contenue dans un réservoir 12 maintenu sous gaz neutre de préférence, le même que le fluide d'entraînement, pour éviter toute pollution.

Dans l'exemple de réalisation schématisé, on trie une poudre d'alliages de nickel dans un courant d'argon.

La sortie du fluide d'entraînement et de la poudre en suspension dans le dernier dispositif n de la chaîne aboutit à une chambre de récupération 13 munie à sa partie supérieure d'un filtre 14 qui retient les poussières et les particules non métalliques, le fluide sortant étant pratiquement exempt de corps en suspension, il peut être recyclé dans l'installation.

Selon une forme de réalisation (fig. 1) des colonnes de tri 3, elles se présentent sous l'aspect d'une enceinte cylindrique de diamètre constant dans l'axe desquelles sont fixés des tubes distributeurs 7. Les tubes distributeurs 7 sont constitués de deux parties, une partie 15 de faible diamètre traversant approximativement la moitié supérieure de la colonne, et une partie 16 de diamètre plu important occupant approximativement la moitié inférieure de la colonne. Au moins un orifice de sortie 17 est prévu dans le fond de la partie 16. Un déflecteur 9, fixé sur le fond de la partie 16, ayant une forme concave dirigée vers le haut, permet de répartir le fluide d'entraînement et la poudre entraînée de manière uniforme dans l'espace annulaire séparant la partie 16 de la paroi de la colonne. Le tube distributeur forme ainsi à l'intérieur de la colonne de diamètre constant deux zones annulaires dont le rapport des sections peut être choisi et déterminé par les diamètres des parties 15 et 16.

Selon une autre forme de réalisation de la colonne de tri représentée figure 2, elle est constituée de deux parties 18 et 19 de diamètre différent, la partie supérieure 18 ayant le diamètre le plus important et la partie inférieure 19, le diamètre le plus faible. Le tube distributeur 20 présente dans ce cas un diamètre constant d'une extrémité l'autre. Le fond du tube est ouvert ou présente au moins une ouverture pour le passage du fluide d'entraînement et de la poudre entraînée et porte à une faible distance de son ouverture un déflecteur présentant une concavité dirigée vers le haut.

La vitesse du fluide d'entraînement dans les différentes colonnes de tri est réglée pour chacune d'elles par le rapport des diamètres de la colonne et du tube distributeur et est fonction des densités et des diamètres des grains à séparer. Il est à noter que la vitesse minimale du fluide dans le nème dispositif (partie haute de la nème colonne) est égale à la vitesse maximale dans le (n + 1)ème dispositif situé en amont (partie basse de la (n + 1)ème colonne).

Quant aux tamis, ils sont dimensionnés de façon à ce que le (n + 1)ème tamis, c'est-à-dire celui placé entre les colonnes respectivement de rang n et de rang (n + 1), retienne les particules légères d'un diamètre minimal égal au diamètre minimal des particules lourdes retenues dans la réserve de la n ème colonne.

La purification des poudres par élutriation fait appel à la loi de Stokes. Les poudres brutes de fabrication ayant subi un tamisage grossier pour éliminer les particules de plus gros diamètres sont constituées dans le cas d'alliages de nickel de grains de différents diamètres de densité 8 (correspondant à l'alliage métallique) et densité inférieure à 5,5 (correspondant aux particules non métalliques).

D'après la lois de Stokes de tels grains ne peuvent être séparés qu'à deux conditions : les diamètres extrêmes des grains doivent être dans un rapport $\leq 1,25$ ; la colonne d'élutriation ou de tri doit présenter deux sections dont le rapport des diamètres est également de 1,25, les sections. et, par conséquent, les vitesses d'entraînement seront dans le rapport $(1,25)^2$ et $1/(1,25)^2$ respectivement.

Le mode de fonctionnement de la chaîne de traitement selon l'exemple de réalisation est ci-après décrit.

L'ensemble du traitement se fait sous atmosphère contrôlée (argon) à partir de poudres manipulées à l'abri de l'air. Les poudres provenant du réservoir commun 12 sont tamisées et séparées en semi-continu dans un courant d'argon. Périodiquement (tous les 1/4 d'heure par exemple) l'alimentation en argon est interrompue et les poudres nettoyées tombent dans les réserves 21 correspondant chacune à une granulométrie distincte, tandis que les particules étrangères demeurent sur les tamis correspondant à leur granulométrie respective.

Le nombre des dispositifs en série est fonction du spectre granulométrique initial. Ainsi, dans l'exemple donné, l'emploi de n dispositifs permet de traiter une poudre dont les diamètres extrêmes $\phi$ et $\varphi$ des particules sont dans le rapport $\phi/\varphi = 1,25^n$.

Les poudres séparées peuvent être ensuite réunies de façon à reconstituer le spectre granulométrique initial (en prévoyant une réserve unique), soit un spectre différent (en choisissant la granulométrie et le pourcentage de chacune à partir des réserves 21). Dans le cas où pour l'utilisation envisagée, on a besoin de poudres d'un spectre de granulométrie très étroit, on peut procéder à un nouveau tamisage plus poussé sur des poudres préalablement rendues « propres » au sens de l'élimination des grains de densité différente, selon la méthode décrite ci-dessus.

La vitesse du fluide d'entraînement dans les différentes colonnes de tri est réglée pour chacune d'elles par le rapport des diamètres de la colonne et du tube distributeur et est fonction des densités et des diamètres des grains à séparer.

## Revendications

1. Dispositif d'élutriation pour purification et séparation de poudres de densités différentes, se composant d'une succession d'au moins deux colonnes de tri présentant chacune deux zones de sections différentes, celle de la zone basse étant inférieure à celle de la zone haute, et comportant, à la partie haute, d'une part, des moyens d'introduction de la poudre à trier et d'un fluide d'entraînement constitués par un tube distributeur disposé dans l'axe de la colonne et débouchant, à la base de la zone de plus faible section, par une ouverture située devant un déflecteur et, d'autre part, une sortie du fluide d'entraînement et, à la partie basse, une réserve à grains recevant la fraction de poudre de forte granulométrie et un dispositif d'évacuation de ces grains ; le rapport des deux sections des zones de chaque colonne étant constant d'une colonne à l'autre et la section de la zone basse de la colonne de rang $(n + 1)$ étant telle que la vitesse d'écoulement y est égale à la vitesse d'écoulement dans la zone haute de la colonne de rang n qui précède.

2. Dispositif d'élutriation suivant la revendication 1, caractérisé en ce que, sur la sortie du fluide d'entraînement de chaque colonne est placé un tamis dimensionné de façon à ce qu'il retienne les particules légères d'un diamètre minimal égal au diamètre minimal des particules lourdes retenues dans la réserve située à la partie basse de la même colonne.

## Claims

1. Elutriator for purifying and separating powders of different densities, consisting of a succession of at least two classifying columns, each having two zones of different sections, that of the bottom zone being smaller than that of the top zone, and comprising, in the top part, on the one hand, means for introducing the powder to be classified and an entrainment fluid, consisting of a distributor tube arranged on the axis of the column and opening out, at the base of the zone of smaller section, via an opening situated in front of a baffle and, on the other hand, an outlet for the entrainment fluid and, in the bottom part, a pool for grains receiving the powder fraction of large particle size and a device for removing these grains ; the relationship of the two sections of the zones of each column is constant from one column to another and in that the section of the bottom zone of the column of rank $(n + 1)$ is such that the velocity of flow therein is equal to the velocity of flow in the top zone of the preceding column of rank n.

2. Elutriator according to Claim 1, characterized in that over the outlet for the entrainment fluid of each column there is placed a screen sized so that it shall retain the light particles of a minimum diameter equal to the minimum diameter of the heavy particles retained in the pool situated in the bottom part of the same column.

## Patentansprüche

1. Abscheidevorrichtung zum Reinigen und Trennen von Pulvern unterschiedlicher Dichte, die aus einer Folge von wenigstens zwei Klassierungssäulen mit jeweils zwei Zonen unterschiedlichen Querschnitts besteht, wobei der Querschnitt der unteren Zone kleiner ist als der Querschnitt der oberen Zone, wobei jede Säule

in ihrem oberen Teil einerseits Mittel zur Einbringung des zu klassierenden Pulvers und eines Führungsfluids aufweist, die aus einem in der Achse der Klassierungssäule angeordneten und in der Basis der Zone mit dem kleinsten Querschnitt in einer vor einem Deflektor liegenden Öffnung mündenden Verteilerrohr bestehen, und andererseits einen Ausgang für das Führungsfluid aufweist,

und in ihrem unteren Teil einen Körnerrückhalt zur Aufnahme der Pulverfraktion mit großem Korndurchmesser sowie eine Vorrichtung zur Abführung dieser Körner aufweist, und wobei das Verhältnis der beiden Querschnitte der Zonen jeder Säule von einer Säule zur anderen konstant ist und der Querschnitt der unteren Zone der Säule mit der Rangstufe $(n + 1)$ so bemessen ist, daß die Strömungsgeschwindigkeit dort gleich der Strömungsgeschwindigkeit in der oberen Zone der vorangehendem Säule mit der Rangstufe $n$ ist.

2. Abscheidevorrichtung nach Anspruch 1, dadurch gekennzeichnet, daß an dem Ausgang für das Führungsfluid jeder Säule ein Sieb angeordnet ist, das so bemessen ist, daß es die leichten Partikel zurückhält, deren Durchmesser gleich dem Minimaldurchmesser des in dem im unteren Teil derselben Säule gelegenen Rückhalts zurückgehaltenen schweren Partikel ist.

FIG.:1

FIG.:2